# EUROPÄISCHE PATENTSCHRIFT

(11) **EP 2 580 444 B1**
(45) Veröffentlichungstag und Bekanntmachung des Hinweises auf die Patenterteilung: **12.08.2015**
(21) Anmeldenummer: 11723486.4
(22) Anmeldetag: 07.06.2011
(51) Int. Cl.: F02B 33/40, F02B 33/44, F02B 39/10, F02D 23/00

(54) **LADER FÜR VERBRENNUNGSMOTOREN**
COMPRESSOR / CHARGER FOR COMBUSTION ENGINE
COMPRESSEUR POUR MOTEUR À COMBUSTION

(30) Priorität: 09.06.2010 DE 102010023188
(43) Veröffentlichungstag der Anmeldung: 17.04.2013
(73) Patentinhaber: D. Brown Technik AG, 85276 Pfaffenhofen-Hettenshausen (DE)
(72) Erfinder: THALHOFER, Augustin, 86863 Langenneufnach (DE)
(74) Vertreter: Weickmann & Weickmann
(86) Internationale Anmeldenummer: PCT/EP2011/059385
(87) Internationale Veröffentlichungsnummer: WO 2011/154400

(56) Entgegenhaltungen:
- DE-A1- 3 322 171
- GB-A- 2 214 979
- US-A1- 2010 095 914

## Beschreibung

### I. Anwendungsgebiet

Die Erfindung betrifft eine Kombination aus einem Abgasturbolader und einem Lader für einen Verbrennungsmotor, wobei der Lader einen Turboverdichter mit wenigstens einem Verdichterlaufrad sowie mit einer Saugseite und einer Druckseite, eine Schwungmasse zum Speichern von Antriebsenergie, einen Hilfsmotor zum Antreiben des Verdichterlaufrades und der Schwungmasse sowie ein auf der Saugseite des Turboverdichters angeordnetes erstes Absperrorgan umfasst, wobei der Bereich zwischen dem ersten Absperrorgan und dem Verdichterlaufrad des Turboverdichters einen saugseitigen Verdichterluftraum bildet und der Turboverdichter derart gestaltet ist, dass der saugseitige Verdichterluftraum nach dem Schließen des ersten Absperrorgans vorzugsweise ausschließlich mittels der eigenen Verdichterleistung des Turboverdichters im Wesentlichen evakuierbar ist.

### II. Technischer Hintergrund

Es ist bekannt, die einem Verbrennungsmotor für die Verbrennung in den Zylindern zugeführte Luft durch Abgasturbolader, die von der Abgasenergie des Verbrennungsmotors angetrieben werden, oder durch mechanische Lader zu verdichten. Dadurch wird eine Leistungssteigerung des Verbrennungsmotors erzielt. Werden mechanische Lader eingesetzt, können diese direkt vom Verbrennungsmotor z.B. über einen Riementrieb angetrieben werden, oder sie können durch einen Hilfsmotor, zum Beispiel einen Elektromotor, angetrieben werden.

Wird die dem Verbrennungsmotor zugeführte Luft durch einen Abgasturbolader verdichtet, so ist es bekannt, dass bei plötzlichen Lastanforderungen, z.B. beim Übergang aus dem Teillastbereich in den Volllastbereich beim Beschleunigen eines mit dem Verbrennungsmotor angetriebenen Fahrzeuges, der Abgasturbolader nicht in der Lage ist, die zur Bereitstellung des vom Verbrennungsmotor geforderten Drehmomentes erforderliche Ladeluftmenge bereitzustellen. Dieser Effekt wird häufig auch als "Turboloch" bezeichnet. Dies ist dadurch bedingt, dass die vorhandene Abgasenergie nicht ausreicht, den Turbolader so anzutreiben, dass der gewünschte Ladedruck bereitgestellt werden kann. Auch Trägheiten des Turboladers führen dazu, dass es zur Verzögerung im Ladedruckaufbau kommt.

Diese Probleme werden einerseits durch konstruktive Änderungen des Turboladers, z.B. durch Turbolader mit variabler Turbinengeometrie, gelöst. Eine andere im Stand der Technik bekannte Lösung besteht darin, auf der Welle des Turboladers einen Elektromotor vorzusehen (so genannter "elektrisch unterstützter Abgasturbolader").

Eine dritte Möglichkeit besteht darin, zusätzlich zum Abgasturbolader einen mechanisch angetriebenen Lader vorzusehen, der nur dann Ladedruck bereitstellt, wenn der Abgasturbolader nicht aufgrund plötzlicher Lastanforderungen in der Lage ist, den erforderlichen Ladedruck sofort bereitzustellen, d. h. sich im Turboloch befindet. Der mechanische Lader kann dabei prinzipiell vom Verbrennungsmotor angetrieben werden, wie dies auch überwiegend der Fall bei mechanischen Ladern ist, die ausschließlich zur Aufladung des Verbrennungsmotors eingesetzt werden. Da hier der mechanische Lader jedoch lediglich den Abgasturbolader in bestimmten Betriebspunkten unterstützt, werden derartige unterstützende mechanische Lader vorwiegend nicht durch den Verbrennungsmotor selbst, sondern durch einen eigenen Hilfsmotor angetrieben.

Um in diesem Turboloch den fehlenden, nicht vom Abgasturbolader bereitgestellten erforderlichen Ladedruck durch den mechanisch angetriebenen zusätzlichen Lader bereitstellen zu können, muss dieser eine sehr kurze Ansprechzeit aufweisen. Wird der mechanische Lader nur angetrieben, wenn er für die Bereitstellung der Ladeluft benötigt wird, kommt es durch den Hochlauf des mechanischen Laders zu Verzögerungen. Die derzeit am schnellsten ansprechenden Lader benötigen für den Hochlauf eine Anlaufzeit in der Größenordnung von 350 - 400 ms. Wird der mechanische Lader durch einen Elektromotor angetrieben, kommt es bei diesem Hochlauf zu einer sehr hohen Stromaufnahme des Elektromotors. Eine derartige Stromaufnahme ist jedoch bei herkömmlichen 12-Volt-Fahrzeugbordnetzen nicht zulässig, da sie zu erheblichen Spannungseinbrüchen führen kann. Sie liegt in der Größenordnung von 350 A Anlaufstrom bzw. 250 A Dauerstrom bei einer Leistung in der Größenordnung von 2,6 kW.

Aus der GB 2 214 979 A ist ein mechanisch angetriebener Turboverdichter für einen Dieselmotor bekannt. Der mit einem Verdichterlaufrad versehene Turboverdichter weist eine Saugseite und eine Druckseite auf. Insbesondere auf der Saugseite des Turboverdichters ist ein Absperrorgan angeordnet. Der Bereich zwischen dem Absperrorgan und dem Verdichterlaufrad des Turboverdichters bildet einen saugseitigen Verdichterluftraum, der nach dem schließen des Absperrorgans mit Hilfe einer insbesondere an die Saugseite des Turboverdichters angeschlossenen Vakuumpumpe evakuiert werden kann.

In der DE 33 22 171 A1 wird eine Vorrichtung zur Aufladung eines Motors beschrieben, die einen von dem Motor angetriebenen Kompressor umfasst. Der Kompressor ist saug- und druckseitig verschließbar und mittels einer bei verschlossenem Kompressor in Betrieb nehmbaren Vakuumpumpe evakuierbar.

Aus der US 2010/095914 A1 ist ein Kompressor für einen Verbrennungsmotor bekannt, der mit Hilfe-eines Elektromotors angetrieben werden kann. Antriebsenergie für den Kompressor kann in Schwungrädern gespeichert werden.

### III. Darstellung der Erfindung

### a) Technische Aufgabe

Der Erfindung liegt daher die Aufgabe zugrunde, einen mechanisch angetriebenen Lader (nachfolgend als "Lader" bezeichnet) für einen Verbrennungsmotor zu schaffen, der im Rahmen der Unterstützung eines Abgasturboladers zum Ausgleich des so genannten Turboloches bereitgestellt wird, und deshalb bei Bedarf sofort den benötigten Ladedruck bereitstellen kann, und dessen Energieaufnahme gleichzeitig minimiert wird. Darüber hinaus liegt der Erfindung die Aufgabe zugrunde, ein Verfahren zum Betreiben eines derartigen Laders bereitzustellen, das einerseits ein schnelles Bereitstellen des geforderten Ladedrucks ermöglicht, und dabei andererseits sowohl die Energieaufnahme des Laders über die gesamte Betriebsdauer gesehen als auch die in einzelnen Betriebspunkten auftretende maximale Energieaufnahme begrenzt.

### b) Lösung der Aufgabe

Diese Aufgabe wird durch eine Kombination mit den Merkmalen des Anspruches 1 sowie durch ein Verfahren mit den Merkmalen des Anspruchs 9 gelöst. Weitere Merkmale der Erfindung ergeben sich aus den Unteransprüchen.

Ein Lader gemäß der vorliegenden Erfindung umfasst einen Turboverdichter, eine Schwungmasse, einen Hilfsmotor und wenigstens ein erstes Absperrorgan. Der Turboverdichter besitzt wenigstens ein Verdichterlaufrad sowie eine Saugseite und eine Druckseite. Die Druckseite ist die Seite des Verdichterlaufrades des Turboverdichters, an dem die verdichtete Ladeluft den höheren Druck aufweist. Die Druckseite ist damit die in der üblichen Strömungsrichtung der Ladeluft dem Verbrennungsmotor näher liegende Seite des Turboverdichters.

Turboverdichter, Schwungmasse und Hilfsmotor sind mechanisch mit einander verbunden, indem sie z.B. auf einer gemeinsamen Welle angeordnet sind. Der Turboverdichter und die Schwungmasse werden durch den Hilfsmotor angetrieben. In der Schwungmasse wird Antriebsenergie zum Antreiben des Turboverdichters während des Turbolochs gespeichert.

Auf der Saugseite des Turboverdichters ist ein erstes Absperrorgan, z.B. eine steuerbare Drosselklappe, angeordnet. Der Bereich zwischen dem ersten Absperrorgan und dem wenigstens einen Verdichterlaufrad des Turboverdichters bildet einen saugseitigen Verdichterluftraum, der somit den Raum auf der Saugseite des Verdichterlaufrades des Turboverdichters und die auf der Saugseite angeordneten Rohrleitungssysteme bis zu dem ersten Absperrorgan umfasst.

Der Turboverdichter ist so gestaltet, dass der saugseitige Verdichterluftraum vorzugsweise ausschließlich durch die eigene Verdichterleistung des Turboverdichters zumindest weitgehend evakuiert wird, nachdem das erste, d. h. das saugseitige Absperrorgan, geschlossen wurde.

Ein im Sinne der Erfindung ausgebildeter Lader zeichnet sich vor allem dadurch aus, dass der Lader dann, wenn er durch den Hilfsmotor dauerhaft angetrieben wird, in diesem Dauerbetrieb dann, wenn das saugseitige erste Absperrorgan geschlossen ist, nur eine geringe von dem Hilfsmotor bereitzustellende Leistung zum Antrieb des Turboverdichters benötigt. Dadurch ist es möglich, den Turboverdichter des Laders in einem dauerhaft angetriebenen Zustand zu betreiben. Wird der Lader nicht benötigt, um z.B. das Turboloch eines Abgasturboladers, mittels dem der Verbrennungsmotor hauptsächlich aufgeladen wird, auszugleichen, so kann der Lader in einem "Stand-By-Betrieb" betrieben und für den Fall plötzlicher Lastanforderungen stets betriebsbereit vorgehalten werden. Dazu wird das erste Absperrorgan geschlossen. Der Verdichter evakuiert dann vorzugsweise ausschließlich selbständig den saugseitigen Verdichterraum. Durch die Evakuierung des saugseitigen Verdichterraumes muss der Verdichter kaum noch Verdichtungsarbeit leisten. Dadurch wird die Antriebsleistung des Hilfsmotors erheblich reduziert. Der Hilfsmotor muss im Wesentlichen nur noch die mechanischen Verluste des Turboverdichters ausgleichen, um die Turboverdichterdrehzahl auf einer vorgegebenen Solldrehzahl zu halten.

Evakuieren bedeutet hier, im Rahmen der technischen Möglichkeiten ein möglichst großes Vakuum in dem saugseitigen Verdichterraum zu erzeugen, d. h. einen möglichst niedrigen Druck in diesem Raum. Es ist verständlich, dass ein absolutes Vakuum, das heißt ein absolut luftleerer Verdichterraum, naturgemäß nicht erreicht werden kann.

Durch die erfindungsgemäße Ausführung des Laders ist es möglich, den Turboverdichter des Laders im Stand-By-Betrieb bei geringer Energieaufnahme des Hilfsmotors auf einer vorgegebenen Solldrehzahl zu halten, d.h. sein Verdichterlaufrad ständig anzutreiben, um im Bedarfsfall, z.B. dann, wenn der im Normalbetrieb zur Aufladung des Verbrennungsmotors verwendete Turbolader sich im Turboloch befindet und damit den erforderlichen Ladedruck nicht bereitstellen kann, den erforderlichen Ladedruck durch schnelles Ansprechen des zusätzlichen Laders bereitzustellen.

Der Vorteil der vorliegenden Erfindung besteht vor allem darin, dass insbesondere zur Überbrückung des Turbolochs boosterartig innerhalb sehr kurzer Zeit Ladedruck zur Verfügung steht. Die Dauer des Turbolochs liegt bisher bei ca. 500 - 1000 ms. Die derzeit besten Turbolader benötigen zum Hochfahren ca. 350 ms und können ihren Ladedruck daher erst bereitstellen, wenn bereits 70 - 35% der Dauer des bisherigen Turbolochs verstrichen sind. Mit Hilfe der vorliegenden Erfindung steht der erforderliche Lädedruck nach dessen steuerungstechnischem Abruf bereits nach einer Reaktionszeit von weniger als 100 ms zur Verfügung, d. h. nachdem weniger als 20 - 10% der Dauer des bisherigen Turbolochs verstrichen sind. Diese sehr kurze Reaktionszeit wird im Wesentlichen von der Schnelligkeit des Ansprechens des ersten Absperrorgans sowie der Dauer des Druckaufbaus im Turboverdichter nach dem Öffnen des ersten Absperrorgans bestimmt. Der Fahrer des Fahrzeugs, dessen Verbrennungsmotor mit dem erfindungsgemäßen Lader ausgerüstet ist, wird in der Fahrpraxis das noch verbleibende Turboloch mit einer Dauer von weniger als 100 ms kaum noch oder gar nicht mehr spüren. Die Effizienz der Überbrückung des Turbolochs wird mit der vorliegenden Erfindung erheblich gesteigert.

Die von dem Turboverdichter während des Stand-By-Betriebs aufgenommene Antriebsleistung wird hauptsächlich zur Überwindung der mechanischen Verluste benötigt wird. Zu einem geringen Teil wird die Antriebsleistung jedoch weiterhin zur Leistung von Verdichterarbeit, die durch eine nicht vollständige Evakuierung des saugseitigen Verdichterluftraumes bedingt ist, benötigt. Die Antriebsleistung kann in einer vorteilhaften Ausgestaltung der Erfindung deshalb weiter verringert werden, indem auf der Druckseite des Turboverdichters ein zweites Absperrorgan angeordnet wird, der Bereich zwischen dem Verdichterlaufrad des Turboverdichters und dem zweiten Absperrorgan einen druckseitigen Verdichterluftraum bildet und eine Vorrichtung zum im Wesentlichen Evakuieren des druckseitigen Verdichterluftraums vorgesehen wird. Das Erzeugen eines möglichst guten Vakuums in dem druckseitigen Verdichterluftraum, d.h. das Erzeugen eines im Rahmen der technischen Möglichkeiten dem Absolutbetrag nach möglichst geringen Unterdrucks in dem druckseitigen Verdichterluftraum, führt auch dazu, dass der Unterdruck in dem saugseitigen Verdichterluftraum dem Absolutbetrag nach weiter sinkt. In diesem Sinne unterstützt die Vorrichtung zum im Wesentlichen Evakuieren des druckseitigen Verdichterluftraums das Evakuieren des saugseitigen Verdichterluftraums.

Bei der Vorrichtung zum im Wesentlichen Evakuieren des druckseitigen Verdichterluftraums kann es sich z.B. um eine Unterdruckpumpe im Bremssystem eines Fahrzeuges, das mit dem Verbrennungsmotor angetrieben wird, handeln, oder aber um eine beliebige andere Unterdruckpumpe. Dadurch ist es unter Ausnutzung der vorhandenen Unterdruckpumpen möglich, den druckseitigen Verdichterluftraum sowie unterstützend in gewissem zusätzlichen Umfang den saugseitigen Verdichterluftraum zu evakuieren und damit die Leistungsaufnahme des Turboverdichters, und damit des Hilfsmotors, im Stand-By-Betrieb weiter zu reduzieren.

Bei dem Hilfsmotor zum Antreiben des Turboverdichters kann es sich z.B. um einen Elektromotor handeln, der z.B. durch das Bordnetz eines Fahrzeuges gespeist wird.

Um den Einfluss des Elektromotors auf ein Energiebordnetz eines Fahrzeuges zu minimieren, so dass es z.B. nicht zu unzulässigen Spannungseinbrüchen oder übermäßiger Belastung einer Fahrzeugbatterie kommt, ist es vorteilhaft, die Stromaufnahme des Elektromotors z.B. durch eine Regelungseinrichtung zu begrenzen.

In diesem Zusammenhang wird ein weiterer Vorteil der vorliegenden Erfindung deutlich. Im Stand-By-Betrieb des Laders benötigt der Elektromotor zum Antreiben des Turboverdichters bauformabhängig einen Strom in der Größenordnung von ca. 25 A ± 5 A. Dies stellt gegenüber der Dauerstromaufnahme bei herkömmlichen elektromotorisch angetriebenen Ladern in der Größenordnung von 250 A eine erhebliche Reduzierung der Stromstärke auf 10 % dar. Wird eine Unterdruckpumpe zum Evakuieren des druckseitigen Verdichterluftraums verwendet, so kann eine Reduktion der Stromaufnahme auf unter 10 A bzw. auf unter 4 % der Stromaufnahme herkömmlicher Lader erreicht werden. Aufgrund der geringen Ströme bietet der erfindungsgemäße Lader eine wesentlich verbesserte elektromagnetische Verträglichkeit. Er entwickelt spürbar weniger Wärme und die gesamte Elektrik für den Antrieb des Turboverdichters kann kleiner ausgelegt werden, insbesondere können im Querschnitt erheblich dünnere Elektrokabel verwendet werden.

Der Turboverdichter kann als Radialverdichter oder als Axialverdichter ausgestaltet sein. Vorzugsweise kommt ein Radialverdichter umfassend genau ein Verdichterlaufrad mit Drehzahlen von 40.000 - 70.000 U/min zum Einsatz. Insbesondere bei Ausgestaltung des Turboverdichters als Axialverdichter können mehrere in Axialrichtung hintereinander angeordnete Verdichterstufen angeordnet werden.

Um den Übergang von dem Stand-By-Betrieb in den Ladebetrieb bzw. den Übergang von dem Ladebetrieb in den Stand-By-Betrieb steuern zu können, kann zumindest das erste Absperrorgan in einer weiteren vorteilhaften Ausgestaltung der Erfindung durch eine Steuereinrichtung aktiv angesteuert werden.

Ist das ggf. vorhandene zweite Absperrorgan nach einer weiteren vorteilhaften Ausgestaltung der Erfindung ein Rückschlagventil, so ist es nicht erforderlich, eine Steuereinrichtung für das zweite Absperrorgan vorzusehen. Das zweite Absperrorgan schließt dann abhängig von dem Druck auf der Druckseite des Turboverdichters selbsttätig. Es kann jedoch auch ein aktiv z.B. von einer Steuereinrichtung angesteuertes Absperrorgan als zweites Absperrorgan verwendet werden.

Der Lader erfordert zum Betrieb zumindest einen Turboverdichter mit wenigstens einem Verdichterlaufrad sowie einer Saugseite und einer Druckseite, eine Schwungmasse zum Speichern von Antriebsenergie, einen Hilfsmotor zum Antreiben des Verdichterlaufrades und der Schwungmasse und ein erstes Absperrorgan, das auf der Saugseite des Turboverdichters angeordnet ist. Der Bereich zwischen dem ersten Absperrorgan und dem Verdichterlaufrad bildet einen saugseitigen Verdichterluftraum, der die saugseitigen Räume des Turboverdichters selber und der angrenzenden Rohrleitungssysteme umfasst. Der Lader wird zusätzlich zu einem Abgasturbolader eingesetzt, um kurzzeitige Drehmomentanforderungen durch den Verbrennungsmotor erfüllen zu können bzw. den Betriebsbereich des Verbrennungsmotors auszudehnen.

Die Schwungmasse kann konstruktiv auch durch geeignete Gestaltung der drehenden Massen des Hilfsmotors und/oder des Turboverdichters erzielt werden.

Das Betreiben des Laders zusammen mit dem Verbrennungsmotor erfolgt, indem das Verdichterlaufrad des Turboverdichters und die Schwungmasse durch den Hilfsmotor ständig angetrieben werden. In Betriebspunkten, in denen es nicht erforderlich ist, durch den Turboverdichter einen erhöhten Ladedruck bereitzustellen, wird das erste Absperrorgan geschlossen (vorstehend als "Stand-By-Betrieb" bezeichnet). Der saugseitige Verdichterluftraum wird dann vorzugsweise ausschließlich mittels der eigenen Verdichterleistung des Turboverdichters evakuiert.

Der saugluftseitige Verdichterluftraum ist dadurch zumindest weitgehend evakuiert. D. h. sein Druck ist erheblich niedriger als der Luftdruck der Umgebung.

Wird der Turboverdichter z.B. bei plötzlichen Drehmomentanforderungen an den Verbrennungsmotor, die durch Zusammenwirken des Verbrennungsmotors mit dem als Hauptlader eingesetzten Abgasturbolader nicht umgesetzt werden können (da z.B. der Abgasturbolader aufgrund des Turboloches dazu kurzfristig nicht in der Lage ist), benötigt, um die Ladeluft zu verdichten, wird das erste Absperrorgan geöffnet. Es strömt von der Saugseite Luft in den Turboverdichter und die eingeströmte Luft wird von diesem sofort auf einen geforderten Druck verdichtet, da sich das Verdichterlaufrad des Turboverdichters im Stand-By-Betrieb bereits mit seiner Nenndrehzahl dreht und damit ein Hochlaufen des Verdichterlaufrades auf Nenndrehzahl nicht erforderlich ist. Die auf den höheren Ladedruck durch den mechanischen Lader verdichtete Luft kann dann sofort dem Verbrennungsmotor zur Verfügung gestellt werden.

Das Antreiben des Turboverdichters wird während dieses Ladebetriebes, in dem der Turboverdichter des Laders Ladedruck für den Verbrennungsmotor bereitstellt, zusätzlich zum dauerhaften Antrieb durch den Hilfsmotor von der Antriebsenergie, die in der Schwungmasse gespeichert ist, spürbar unterstützt.

Ein Drehzahlabfall des Turboverdichters, nachdem das erste Absperrorgan geöffnet wurde und das Verdichterlaufrad beginnt, Verdichtungsarbeit zu leisten und damit eine höhere Leistung aufnimmt, wird durch die Schwungmasse verringert, soweit der Hilfsmotor nicht in der Lage ist, das plötzlich vom Turboverdichter angeforderte Antriebsmoment bereitzustellen.

Damit ist es möglich, ein schnelles Ansprechen des Turboverdichters z.B. dann sicherzustellen, wenn ein hauptsächlich zur Aufladung des Verbrennungsmotors verwendeter Abgasturbolader nicht in der Lage ist, kurzfristig den erforderlichen Ladedruck bereitzustellen. Der Ladedruck wird sofort, und nicht erst verzögert bereitgestellt, da sich das Verdichterlaufrad stets in einem dauerhaft mit seiner Nenndrehzahl angetriebenen Zustand befindet und damit sofort in der Lage ist, Verdichtungsarbeit bereitzustellen.

Bei plötzlichem Einsatz des mechanischen Laders können Drehzahleinbrüche des Verdichterlaufrades, und damit entsprechende Druckabfälle der vom Turboverdichter bereitgestellten Ladeluft, reduziert werden, indem die Drehzahleinbrüche durch die in der Schwungmasse gespeicherte Antriebsenergie verringert werden. Soweit es dem Hilfsmotor nicht möglich ist, in der Phase, in der der mechanische Lader den Ladedruck für den Verbrennungsmotor bereitstellt, einen Druckabfall auszugleichen, sinkt die Drehzahl des Verdichterlaufrades ab. Dies kann z.B. dann der Fall sein, wenn das Drehmoment des Hilfsmotors nicht ausreicht, um das erforderliche Antriebsmoment für den Turboverdichter bereitzustellen, z.B. deshalb, weil die Energieaufnahme des Hilfsmotors bewusst begrenzt wird. Die in der Schwungmasse gespeicherte Antriebsenergie wird in diesen Phasen zusätzlich zum Antreiben des Turboverdichters genutzt und die Drehzahleinbrüche werden damit reduziert. In der Phase, in der sich der Lader anschließend im Stand-By-Betrieb befindet, dass heißt zumindest das erste Absperrorgan geschlossen ist und der Turboverdichter keine Verdichtungsarbeit leistet, wird die Drehzahl des Verdichterlaufrades und der Schwungmasse durch den Hilfsmotor wieder auf die Nenndrehzahl gebracht.

Da in der Regel die Betriebsphasen des Laders nur kurz sind, d.h. in der Größenordnung von unter einer Sekunde liegen, da lediglich das Turboloch eines Abgasturboladers ausgeglichen werden muss, kommt es in dieser Zeit nur zu geringen Drehzahleinbrüchen des Laders, und damit nur zu geringen Abfällen des Ladedruckes.

Durch das Evakuieren des saugseitigen Verdichterluftraumes wird in Phasen, in denen der Turboverdichter keine Arbeit leisten muss und das erste Absperrorgan geschlossen ist, die Leistungsaufnahme des Turboverdichters, und damit auch des Hilfsmotors minimiert, so dass ein energetisch optimaler Betrieb erreicht wird.

Ständiges Betreiben des Laders bedeutet, dass das Verdichterlaufrad des Turboverdichters des Laders auch zum Beispiel während Leerlaufphasen etc. des Verbrennungsmotors angetrieben wird. Es ist jedoch auch denkbar, den Hilfsmotor des Laders in Betriebsphasen, in denen nicht zu erwarten ist, dass in einem unmittelbar bevorstehenden Zeitraum durch den Turboverdichter des Laders Ladedruck abgerufen wird, vorübergehend abzuschalten, z.B. in längeren Leerlaufphasen des Verbrennungsmotors.

Für das Verfahren zum Betreiben des Laders ist es zusätzlich vorteilhaft, auf der Druckseite des Turboverdichters ein zweites Absperrorgan vorzusehen, so dass der Bereich zwischen dem Verdichterlaufrad des Turboverdichters und dem zweiten Absperrorgan einen druckseitigen Verdichterluftraum bildet, und den druckseitigen Verdichterluftraum mittels einer zusätzlichen Vorrichtung zum Evakuieren des druckseitigen Verdichterluftraums zu evakuieren. Dadurch kann die von dem Turboverdichter trotz möglichst guter Evakuierung des saugseitigen Verdichterluftraums weiterhin aufgenommene Verdichterleistung noch weiter reduziert werden.

Das Evakuieren des druckseitigen Verdichterluftraums kann mit einer der z.B. in einem Fahrzeug bereits vorhandenen Vorrichtungen, z.B. mittels einer Unterdruckpumpe eines Bremssystems, erfolgen.

Bei dem Verfahren zum Betreiben eines Laders ist es vorteilhaft, als Hilfsmotor einen Elektromotor einzusetzen. Dieser kann vorteilhafterweise durch das Bordnetz eines Fahrzeuges, in dem der Verbrennungsmotor eingesetzt wird, gespeist werden. Damit kann, im Unterschied zu anderen Ausführungen des Hilfsmotors, z.B. hydraulischen Motoren, auf die vorhandene Energieversorgung des Fahrzeugs zurückgegriffen werden.

Im Weiteren ist es beim Betreiben des Laders dann, wenn als Hilfsmotor ein Elektromotor verwendet wird, vorteilhaft, abhängig vom Energiebordnetz des Fahrzeuges den von dem Elektromotor aufgenommenen Strom zu begrenzen. Beispielsweise ist im Rahmen der vorliegenden Erfindung eine Begrenzung auf eine Größenordnung von ca. 100 A denkbar. Insbesondere ist es vorteilhaft, den Strom so zu begrenzen, dass durch die plötzliche Leistungsaufnahme des Hilfsmotors beim Übergang vom Stand-By-Betrieb in den Ladebetrieb keine hohen Spannungseinbrüche auftreten, insbesondere keine Spannungseinbrüche, die zu Spannungen außerhalb der Spezifikationsgrenzen elektronischer Steuergeräte des Fahrzeuges führen. Damit wird sichergestellt, dass sämtliche Steuergeräte des Fahrzeuges während des gesamten Betriebes zuverlässig arbeiten.

Es ist vorteilhaft, zumindest das erste Absperrorgan aktiv durch eine Steuereinrichtung anzusteuern, während das ggf. vorhandene zweite

Absperrorgan wahlweise entweder z.B. durch eine entsprechende Steuereinheit angesteuert werden kann oder auch selbständig in den geschlossenen Zustand übergehen kann, indem es als Rückschlagventil ausgeführt ist.

### c) Ausführungsbeispiele

Ausführungsformen der Erfindung werden nachfolgend anhand der beigefügten Zeichnungen beschrieben.

Es zeigen
- Fig. 1:: eine Anordnung aus Verbrennungsmotor, Abgasturbolader und einem zusätzlichen erfindungsgemäßen Lader,
- Fig. 2:: eine Anordnung aus Verbrennungsmotor, Abgasturbolader und einem zusätzlichen erfindungsgemäßen Lader, wobei der druckseitige Verdichterluftraum des zusätzlichen erfindungsgemäßen Laders durch eine Unterdruckpumpe evakuiert wird, und
- Fig. 3:: eine Ausführungsform des erfindungsgemäßen Laders mit Unterdruckpumpe, bei welcher der Turboverdichter als Radialverdichter ausgebildet ist.

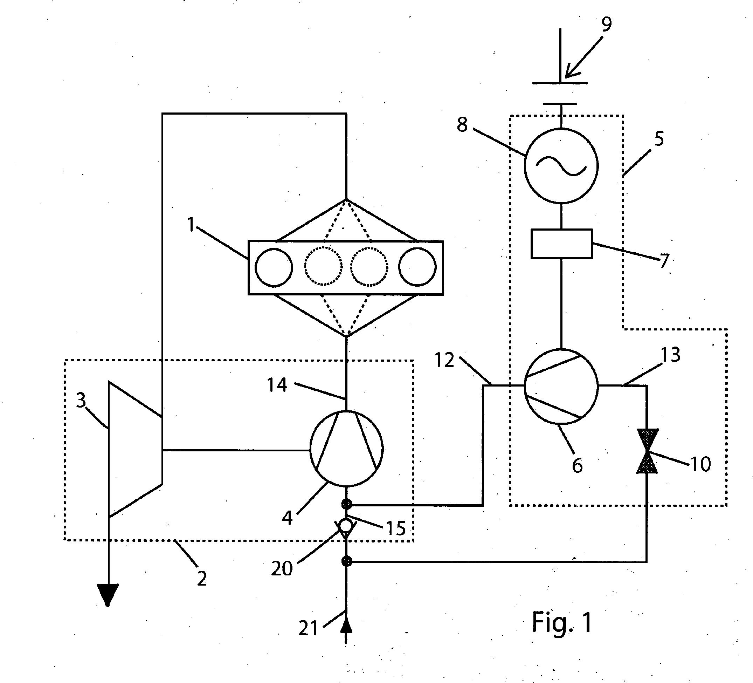

Figur 1 zeigt eine Anordnung, bei der ein Verbrennungsmotor 1 im Normalbetrieb durch einen Abgasturbolader 2 mit Ladedruck versorgt wird, und wobei der Abgasturbolader 2 durch einen mechanischen Lader 5, nachfolgend als Lader bezeichnet, zusätzlich unterstützt wird. Die von dem Turboverdichter 6 des Laders 5 verdichtete Luft wird auf der Saugseite 15 des Verdichters 4 des Abgasturboladers 2 eingespeist. Die Saugseite 15 des Abgasturboladers 2 und die Druckseite 12 des Laders 5 sind somit in der in Fig. 1 dargestellten Anordnung miteinander verbunden. Darüber hinaus ist ein Rückschlagventil 20 vorgesehen, um ein Zurückschlagen des auf der Druckseite 12 von dem Turboverdichter 6 erzeugten Ladedruckes in die Ansaugleitung 21 zu verhindern.

Der Abgasturbolader 2 besteht aus einer mit dem Abgasmassenstrom des Verbrennungsmotors 1 betriebenen Turbine 3, die den Verdichter 4 des Abgasturboladers 2 antreibt. Die von dem Verdichter 4 des Abgasturboladers 2 auf der Saugseite 15 durch die Ansaugleitung 21 angesaugte Luft wird zu der Druckseite 14 des Verdichters 4 hin verdichtet und dann anschließend dem Verbrennungsmotor 1 zugeführt.

Der Lader 5 umfasst einen Turboverdichter 6, der von einem Hilfsmotor 8 angetrieben wird. Der Hilfsmotor 8 treibt auch die Schwungmasse 7 an.

In der Figur 1 ist der Hilfsmotor 8 als Elektromotor dargestellt, der von einem Fahrzeugbordnetz 9 mit Energie versorgt wird. Es sind jedoch auch beliebige andere Ausführungen von Hilfsmotoren einsetzbar.

Der Turboverdichter 6 des Laders 5 weist eine Saugseite 13 und eine Druckseite 12 auf. Auf der Saugseite 13 ist ein Absperrorgan 10 angeordnet.

In einem Betriebspunkt, in dem der Abgasturbolader 2 aufgrund eines zu geringen Abgasmassenstroms nicht allein in der Lage ist, einen geforderten Ladedruck bereitzustellen, mit dem das vom Verbrennungsmotor 1 angeforderte Drehmoment erzielt werden kann, wird der zusätzlich erforderliche Ladedruck durch den Turboverdichter 6 des Laders 5 bereitgestellt.

In diesem "Ladebetrieb" ist das Absperrorgan 10 geöffnet. Durch das Absperrorgan 10 und die Saugseite 13 des Turboverdichters 6 hindurch wird vom Turboverdichter 6 Luft durch die Ansaugleitung 21 angesaugt, die z.B. von einem (hier nicht dargestellten) Luftfilter eines Fahrzeugs kommt. Die Luft wird durch den Turboverdichter 6 verdichtet. In der in Figur 1 dargestellten Konfiguration wird die von dem Lader 5 bereitgestellte Ladeluft der Saugseite 15 des Verdichters 4 zugeführt und der aus der Luft vom Abgasturbolader 2 und dem Lader 5 zusammengesetzte Luftmassenstrom strömt dann gemeinsam in die Zylinder des Verbrennungsmotors 1.

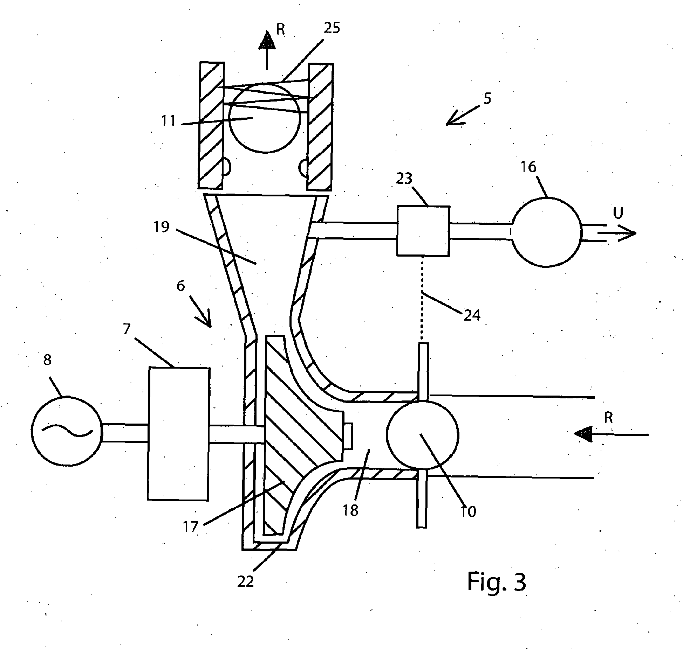

Reicht die Verdichterleistung des Verdichters 4 des Abgasturboladers 2 allein aus, um den Ladedruck bereitzustellen, der für das vom Verbrennungsmotor 1 geforderte Drehmoment erforderlich ist, so wird der Lader 5 im Stand-By-Betrieb betrieben. Dazu wird zunächst das Absperrorgan 10 geschlossen. Der Hilfsmotor 8 treibt weiterhin den Turboverdichter 6 des Laders 5 an. Auch im Stand-By-Betrieb wird somit das in Figur 3 dargestellte Verdichterlaufrad 17 des Turboverdichters 6 des Laders 5 vom Hilfsmotor 8 ständig angetrieben. Lediglich in bestimmten Betriebszuständen, in denen absehbar ist, dass durch den Lader 5 über längere Zeit kein Ladedruck mehr bereitgestellt werden muss, ist es denkbar, den Lader 5 vollständig abzuschalten, z.B. in längeren Leerlaufphasen des Verbrennungsmotors.

In der Stand-By-Phase evakuiert der Turboverdichter 6 den in Figur 3 zu erkennenden saugseitigen Verdichterluftraum 18, der zwischen dem Verdichterlaufrad 17 sowie dem Absperrorgan 10 liegt und von den saugseitigen Wandungen des Gehäuses des Turboverdichters 6 begrenzt wird, selbsttätig.

Ist der saugseitige Verdichterluftraum 18 durch den Turboverdichter 6 weitgehend evakuiert worden, wird dadurch die vom Turboverdichter 6 aufzubringende Verdichtungsarbeit erheblich vermindert. Im Fall eines totalen Vakuums, das praktisch jedoch nicht erreichbar ist, würde sogar überhaupt keine Verdichtungsarbeit geleistet werden. Der Hilfsmotor 8 muss in diesem Betriebszustand dann lediglich die Reibungsverluste des Turboverdichters 6, im Falle eines nicht vollständigen Vakuums lediglich eine geringe zusätzliche Verdichtungsarbeit leisten. Dadurch ist die Energieaufnahme des Hilfsmotors 8 in diesem Betriebszustand sehr gering.

Gleichzeitig ist gewährleistet, dass sich das Verdichterlaufrad 17 des Turboverdichters 6 des Laders 5 auch im Stand-By-Betrieb stets mit einer vorgegebenen Drehzahl dreht, um beim plötzlichen Übergang in den Ladebetrieb des Laders 5 sofort den gewünschten Ladedruck bereitzustellen, ohne vorher erst den Lader 5 auf seine Nenndrehzahl bringen zu müssen. Indem also eine Hochlaufphase des Laders 5 beim Übergang vom Stand-By- in den Ladebetrieb vermieden wird, kann erheblich schneller der für den Verbrennungsmotor erforderliche Ladedruck bereitgestellt werden, und der Verbrennungsmotor 1 kann sofort das geforderte Drehmoment abgeben.

Da der Abgasturbolader 2 in der Regel nach einer kurzen Zeit, die sich in der Größenordnung von einer Sekunde und weniger bewegt, wieder in der Lage ist, den von dem Verbrennungsmotor 1 geforderten Ladedruck allein ohne den zusätzlichen Lader 5 bereitzustellen, kann der Lader 5 nach Ablauf dieses Zeitraumes wieder in die Stand-By-Phase übergehen. Dabei wird wie vorstehend beschrieben das saugseitige Absperrorgan 10 geschlossen. Der Turboverdichter 6 evakuiert dann den saugseitigen Verdichterluftraum 18 zwischen dem Absperrorgan 10 und dem Verdichterlaufrad 17. Der Hilfsmotor 8 treibt den Turboverdichter 6 und die Schwungmasse 7 weiterhin an. Er muss dafür aufgrund der geringen Leistungsaufnahme des Turboverdichters 6 jedoch nur eine geringe Energie bereitstellen.

Abhängig von der Höhe des vom Hilfsmotor 8 bereitgestellten Drehmoments kann es während des Ladebetriebs des Laders 5 zu Drehzahleinbrüchen des Turboverdichters 6 kommen, da die von dem Turboverdichter 6 an die verdichtete Ladeluft abzugebende Verdichtungsarbeit größer ist als das von dem Hilfsmotor 8 bereitgestellte Antriebsdrehmoment. Dies kann einerseits aus der Dimensionierung des Hilfsmotors 8 resultieren, andererseits aber auch dadurch, dass z.B. in dem Fall, in dem der Hilfsmotor 8 ein Elektromotor ist, der vom Bordnetz mit Strom versorgt wird, die Stromaufnahme des Elektromotors begrenzt wird, um z.B. keine unzulässigen Spannungseinbrüche des Fahrzeug-Energiebordnetzes zu bewirken. In diesem Fall werden zu starke Drehzahleinbrüche aufgrund der Differenz des von dem Turboverdichter 6 geforderten und des von dem Hilfsmotor 8 abgegebenen Drehmomentes durch die in der Schwungmasse 7 gespeicherte Antriebsenergie ausgeglichen. Die von der Schwungmasse 7 gespeicherte Antriebsenergie sorgt zumindest kurzzeitig dafür, dass die Drehzahl des Verdichterlaufrades 17 des Turboverdichters 6 beim plötzlichen Übergang von dem Stand-By- in den Ladebetrieb zumindest weitgehend aufrechterhalten wird und nicht zu stark unter die Nenndrehzahl absinkt, so dass der Turboverdichter 6 des Laders 5 auch weiterhin wie gefordert ausreichend Ladedruck bereitstellen kann. Da die Betriebsphasen des Laders 5 in der Regel kürzer als eine Sekunde sind, da üblicherweise lediglich das Turboloch des Abgasturboladers 2 ausgeglichen werden muß, kommt es aufgrund der Wirkungsweise der Schwungmasse 7 zu lediglich geringen Drehzahleinbrüchen.

In der auf die Ladephase folgende Stand-By-Phase, in der der Turboverdichter 6 nur eine geringe Antriebsleistung benötigt, wird das System aus Turboverdichter 6, Schwungmasse 7 und Hilfsmotor 8 durch den Hilfsmotor 8 langsam wieder auf Nenndrehzahl gebracht. Die Schwungmasse 7 speichert dann wieder Antriebsenergie, die in der nachfolgenden Ladephase dann wieder wie vorstehend beschrieben zum zusätzlichen Antreiben des Turboverdichters 6 zusätzlich zum Antreiben des Turboverdichters 6 durch den Hilfsmotor 8 genutzt wird.

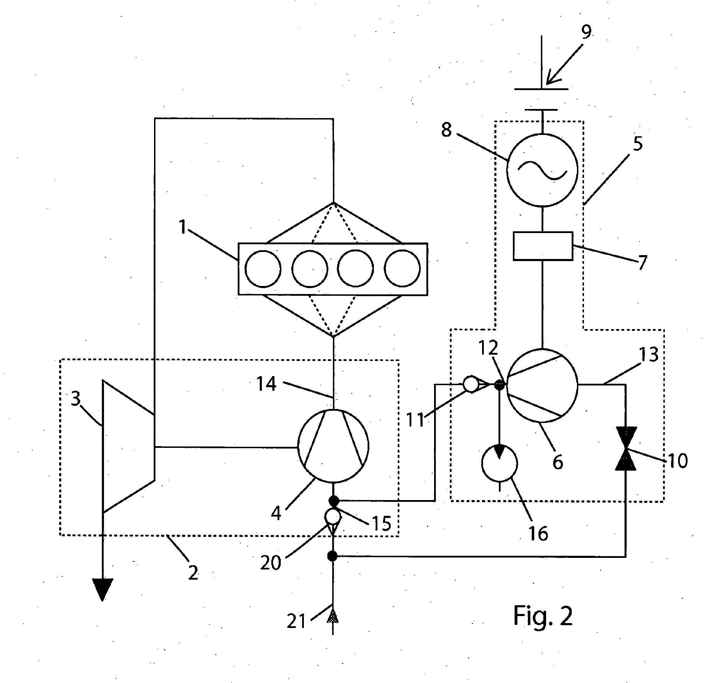

Figur 2 zeigt eine weitere vorteilhafte Ausführungsform. In dieser ist abweichend von der in Figur 1 gezeigten Ausführungsform auf der Druckseite 12 des Turboverdichters 6 ein zweites Absperrorgan 11 in Form eines Rückschlagventils sowie eine Unterdruckpumpe 16 angeordnet. Die Unterdruckpumpe 16 steht mit dem in Figur 3 zu erkennenden druckseitigen Verdichterluftraum 19 des Laders 5 auf der Druckseite 12 des Turboverdichters 6 in Verbindung. Durch diese Unterdruckpumpe 16 wird beim Übergang in die Stand-By-Phase nach dem Schließen des Absperrorgans 10 der druckseitige Verdichterluftraum 19 evakuiert. Dabei schließt sich das als Rückschlagventil ausgeführte Absperrorgan 11 selbsttätig. Durch dieses Evakuieren des druckseitigen Verdichterluftraums 19, das auch eine weitere Verbesserung des Vakuums in dem saugseitigen Verdichterluftraum 18 zur Folge hat, kann die vom Turboverdichter 6 geleistete Verdichtungsarbeit, und damit die Leistungsaufnahme des Hilfsmotors im Stand-By-Betrieb, weiter reduziert werden.

Unmittelbar nach dem Übergang des Laders 5 von der Stand-By-Phase in den Ladebetrieb öffnet sich das als Rückschlagventil ausgeführte Absperrorgan 11 selbsttätig, um die von dem Turboverdichter 6 des Laders 5 verdichtete Ansaugluft durch den Verdichter 4 des Abgasturboladers 2 zum Verbrennungsmotor 1 strömen zu lassen. Das Absperrorgan 11 kann abweichend von der Darstellung in Figur 2 auch als ansteuerbares Ventil ausgeführt werden, das durch eine externe Steuerung geöffnet bzw. geschlossen wird.

Bei der Unterdruckpumpe 16 kann es sich um eine speziell für den Lader 5 vorgesehene Unterdruckpumpe handeln. Vorteilhafterweise wird jedoch eine bereits in einem Fahrzeug, in dem der Verbrennungsmotor eingesetzt wird, vorhandene Unterdruckpumpe verwendet. Hierfür bietet sich insbesondere die Unterdruckpumpe des Bremssystems an.

Figur 3 zeigt eine Ausführungsform des erfindungsgemäßen Laders 5, bei dem der Turboverdichter 6 als Radialverdichter mit genau einem Verdichterlaufrad 17 ausgebildet ist. Das in an sich bekannter Weise mit Verdichterschaufeln versehene Verdichterlaufrad 17 unterteilt den von dem Verdichtergehäuse 22 seitlich umschlossenen Raum in einen saugseitigen Verdichterluftraum 18 einerseits und einen druckseitigen Verdichterluftraum 19 andererseits. Bei der gezeigten Ausführungsform werden die Verdichterlufträume 18 bzw. 19 in der Durchströmungsrichtung R, in welcher der Lader 5 von der zu verdichtenden bzw. verdichteten Luft durchströmt wird, saugseitig von einem als schwenkbare Drosselklappe ausgeführten Absperrorgan 10 und druckseitig von einem als Rückschlagventil ausgeführten Absperrorgan 11 begrenzt. Die Kugel des Rückschlagventils ist mittels einer Feder 25 in ihre Schließstellung vorgespannt. Über ein Magnetventil 23 ist eine in dem betreffenden Fahrzeug bereits für andere Zwecke vorhandene Unterdruckpumpe 16 an den druckseitigen Verdichterluftraum 19 angeschlossen. Das Magnetventil 23 steht über eine Steuerleitung 24 mit dem Absperrorgan 10 in Verbindung.

Im Stand-By-Betrieb ist das Absperrorgan 10 geschlossen und das Magnetventil 23 geöffnet. Dementsprechend wird der saugseitige Verdichterluftraum 18 mit Hilfe der eigenen Verdichterleistung des Verdichterlaufrades 17 evakuiert, während der druckseitige Verdichterluftraum 19 entsprechend Pfeil U mit Hilfe der Unterdruckpumpe 16 evakuiert wird. Das Absperrorgan 11 hat sich aufgrund des abnehmenden Druckes in dem druckseitigen Verdichterluftraum 19 selbsttätig geschlossen. Das Verdichterlaufrad 17 rotiert mit seiner Nenndrehzahl, wobei der als Elektromotor ausgebildete Hilfsmotor 8 das Verdichterlaufrad 17 und die Schwungmasse 7 bei geringer Stromaufnahme antreibt.

Soll der Lader 5 Ladedruck zur Verfügung stellen, so werden das Magnetventil 23 geöffnet und über die Steuerleitung 24 gleichzeitig das Absperrorgan 10 geöffnet. Die Unterdruckpumpe 16 ist dann von dem druckseitigen Verdichterluftraum 19 getrennt und das Verdichterlaufrad 17 saugt durch das geöffnete Absperrorgan 10 und den saugseitigen Verdichterluftraum 18 hindurch schlagartig Luft zum Verdichten an. Die verdichtete Luft wird durch den druckseitigen Verdichterluftraum 19 und das sich selbsttätig öffnende Absperrorgan 11 hindurch ebenso schlagartig der in Figur 2 gezeigten Druckseite 15 des Verdichters 4 des Abgasturboladers 2 zugeführt.

Wird als Unterdruckpumpe 16 in dem Fahrzeug eine zusätzliche Unterdruckpumpe vorgesehen, die ausschließlich zum Evakuieren des druckseitigen Verdichterluftraums 19 in dem Stand-By-Betrieb dient und ansonsten keine weiteren Aufgaben für andere Fahrzeugsysteme ausübt, kann das in Figur 3 gezeigte Magnetventil 23 entfallen und die zusätzliche Unterdruckpumpe für die Zwecke des Übergangs zwischen dem Stand-By-Betrieb und dem Ladebetrieb direkt angesteuert werden.

Beim Verbrennungsmotor 1 kann es sich um einen Benzinmotor oder einen Dieselmotor handeln. Durch die vorliegende Erfindung ist es bei Verwendung eines Dieselmotors möglich, bei diesem ein optimales Verdichtungsverhältnis von ca. 14:1 einzustellen (gegenüber den bisher erreichten Verdichtungsverhältnissen in der Größenordnung von 15,8:1). Dadurch kann z.B. das Zündverhalten des Dieselmotors optimiert werden.

### BEZUGSZEICHENLISTE

- 1: Verbrennungsmotor
- 2: Abgasturbolader
- 3: Turbine des Abgasturboladers
- 4: Verdichter des Abgasturboladers
- 5: Lader
- 6: Verdichter des Laders
- 7: Schwungmasse
- 8: Hilfsmotor
- 9: Energieversorgung
- 10: Erstes Absperrorgan
- 11: Zweites Absperrorgan
- 12: Druckseite des Laders
- 13: Saugseite des Laders
- 14: Druckseite des Abgasturboladers
- 15: Saugseite des Abgasturboladers
- 16: Unterdruckpumpe
- 17: Verdichterlaufrad
- 18: Saugseitiger Verdichterluftraum
- 19: Druckseitiger Verdichterluftraum
- 20: Rückschlagventil
- 21: Ansaugleitung
- 22: Verdichtergehäuse
- 23: Magnetventil
- 24: Steuerleitung
- 25: Feder

## Patentansprüche

1. Kombination aus einem Abgasturbolader (2) und einem Lader (5) für einen Verbrennungsmotor (1),
wobei der Lader (5)
- einen Turboverdichter (6) mit wenigstens einem Verdichterlaufrad (17), wobei der Turboverdichter (6) eine Saugseite (13) und eine Druckseite (12) aufweist,
- eine Schwungmasse (7) zum Speichern von Antriebsenergie;
- einen Hilfsmotor (8) zum Antreiben des Verdichterlaufrades (17) und der Schwungmasse (7) und
- ein auf der Saugseite (13) des Turboverdichters (6) angeordnetes erstes Absperrorgan (10)
aufweist,
- wobei der Bereich zwischen dem ersten Absperrorgan (10) und dem Verdichterlaufrad (17) des Turboverdichters (6) einen saugseitigen Verdichterluftraum (18) bildet und der Turboverdichter (6) derart gestaltet ist, dass der saugseitige Verdichterluftraum (18) nach dem Schließen des ersten Absperrorgans (10) mittels der eigenen Verdichterleistung des Turboverdichters (6) im Wesentlichen evakuierbar ist, und
- wobei das erste Absperrorgan (10) nur dann geöffnet wird, wenn der Verbrennungsmotor (1) nicht allein durch Zusammenwirken mit dem Abgasturbolader (2) ein vorgegebenes Drehmoment zur Verfügung stellen kann.

2. Kombination nach Anspruch 1,
**dadurch gekennzeichnet, dass**
auf der Druckseite (12) des Turboverdichters (6) ein zweites Absperrorgan (11) angeordnet ist, der Bereich zwischen dem Verdichterlaufrad (17) des Turboverdichters (6) und dem zweiten Absperrorgan (11) einen druckseitigen Verdichterluftraum (19) bildet und eine Vorrichtung zum im Wesentlichen Evakuieren des druckseitigen Verdichterluftraums (19) vorgesehen ist.

3. Kombination nach der Anspruch 2,
**dadurch gekennzeichnet, dass**
die Vorrichtung zum im Wesentlichen Evakuieren des druckseitigen Verdichterluftraums (19) eine Unterdruckpumpe (16) eines Bremssystems eines Fahrzeugs ist.

4. Kombination nach einem der vorhergehenden Ansprüche,
**dadurch gekennzeichnet, dass**
der Hilfsmotor (8) ein von einem Bordnetz (9) eines Fahrzeuges gespeister Elektromotor ist.

5. Kombination) nach Anspruch 4,
**dadurch gekennzeichnet, dass**
eine Regelungseinrichtung zum Begrenzen der Stromaufnahme des Elektromotors vorgesehen ist.

6. Kombination nach einem der vorhergehenden Ansprüche,
**dadurch gekennzeichnet, dass**
der Turboverdichter (6) ein Radialverdichter ist.

7. Kombination nach einem der vorhergehenden Ansprüche,
**dadurch gekennzeichnet, dass**
zumindest das erste Absperrorgan (10) durch eine Steuereinrichtung aktiv ansteuerbar ist.

8. Kombination nach Anspruch 3 oder einem der Ansprüche 4 bis 7 in Verbindung mit Anspruch 2,
**dadurch gekennzeichnet, dass**
das zweite Absperrorgan (11) ein Rückschlagventil ist.

9. Verfahren zum Betreiben einer Kombination aus einem Abgasturbolader (2) und einem eines Lader (5) zusammen mit einem Verbrennungsmotor (1), wobei der Lader (5) einen Turboverdichter (6) mit wenigstens einem Verdichterlaufrad (17) sowie mit einer Saugseite (13) und einer Druckseite (12), einen Hilfsmotor (8) zum Antreiben des Verdichterlaufrades (17), eine Schwungmasse (7) zum Speichern von Antriebsenergie sowie ein auf der Saugseite (13) des Turboverdichters (6) angeordnetes erstes Absperrorgan (10) aufweist, der Bereich zwischen dem ersten Absperrorgan (10) und dem Verdichterlaufrad (17) des Turboverdichters (6) einen saugseitigen Verdichterluftraum (18) bildet, und wobei das Verfahren folgende Schritte umfasst:
• Ständiges Antreiben des Verdichterlaufrades (17) des Turboverdichters (6) und der Schwungmasse (7) mittels des Hilfsmotors (8),
• Schließen zumindest des ersten Absperrorgans (10) und im Wesentlichen Evakuieren des saugseitigen Verdichterluftraums (18) mittels der eigenen Verdichterleistung des Turboverdichters (6), und
• Öffnen des ersten Absperrorgans (10) nur dann, wenn der Verbrennungsmotor (1) ein vorgegebenes Drehmoment nicht zur Verfügung stellen kann, wobei der Hilfsmotor (8) beim Antreiben des Verdichterlaufrades (17) des Turboverdichters (6) von der in der Schwungmasse (7) gespeicherten Antriebsenergie unterstützt wird,
wobei der Lader (5) zusätzlich zu dem Abgasturbolader (2) eingesetzt wird, und das erste Absperrorgan (10) nur dann geöffnet wird, wenn der Verbrennungsmotor (1) nicht allein durch Zusammenwirken mit dem Abgasturbolader (2) ein vorgegebenes Drehmoment zur Verfügung stellen kann.

10. Verfahren nach Anspruch 9,
**dadurch gekennzeichnet, dass** der Lader (5) auf der Druckseite (12) des Turboverdichters (6) ein zweites Absperrorgan (11) aufweist, der Bereich zwischen dem Verdichterlaufrad (17) des Turboverdichters (6) und dem zweiten Absperrorgan (11) einen druckseitigen Verdichterluftraum (19) bildet und das Verfahren zusätzlich den Schritt des im Wesentlichen Evakuierens des druckseitigen Verdichterluftraums (19) mittels einer Vorrichtung zum Evakuieren des druckseitigen Verdichterluftraums (19) umfasst.

11. Verfahren nach Anspruch 10,
**dadurch gekennzeichnet, dass** das Evakuieren des druckseitigen Verdichterluftraums (19) mittels einer die Vorrichtung zum Evakuieren bildenden Unterdruckpumpe (16) eines Bremssystems eines den Verbrennungsmotor (1) umfassenden Fahrzeugs erfolgt.

12. Verfahren nach Anspruch 10 oder 11,
**dadurch gekennzeichnet, dass** das zweite Absperrorgan (11) im Rahmen des Vorgangs des Evakuierens des druckseitigen Verdichterluftraums (19) in einen geschlossenen Zustand überführt wird.

13. Verfahren nach Anspruch 12,
**dadurch gekennzeichnet, dass** das zweite Absperrorgan (11) selbsttätig in den geschlossenen Zustand übergeht.

14. Verfahren nach einem der vorhergehenden Ansprüche 9 bis 13,
**dadurch gekennzeichnet, dass** der Hilfsmotor (8) ein Elektromotor ist und von einem Bordnetz (9) eines den Verbrennungsmotor (1) umfassenden Fahrzeuges gespeist wird.

15. Verfahren nach Anspruch 14,
**dadurch gekennzeichnet, dass** der von dem Elektromotor aufgenommene Strom begrenzt wird.

16. Verfahren nach Anspruch 15,
**dadurch gekennzeichnet, dass** die Begrenzung des Stroms derart erfolgt, dass das Bordnetz (9) keine außerhalb vorgegebener Spezifikationsgrenzen elektronischer Steuergeräte des Fahrzeuges liegende Spannungseinbrüche erfährt.

17. Verfahren nach einem der vorhergehenden Ansprüche 9 bis 16,
**dadurch g e kennzeichnet, dass** zumindest das erste Absperrorgan (10) durch eine Steuereinrichtung aktiv angesteuert wird.

## Claims

1. A combination of an exhaust gas turbocharger (2) and a supercharger (5) for an internal combustion engine (1),
the supercharger (5) comprising:
- a turbocompressor (6) having at least one compressor impeller (17), the turbocompressor (6) having a suction side (13) and a pressure side (12),
- a flywheel mass (7) for storing drive energy,
- an auxiliary motor (8) for driving the compressor impeller (17) and the flywheel mass (7), and
- a first shut-off element (10) which is arranged on the suction side (13) of the turbocompressor (6),
- wherein the region between the first shut-off element (10) and the compressor impeller (17) of the turbocompressor (6) forms a suction-side compressor air space (18), and the turbocompressor (6) being designed in such a way that, after the first shut-off element (10) is closed, the suction-side compressor air space (18) can be substantially evacuated by means of the inherent compressor capacity of the turbocompressor (6), and
- wherein the first shut-off element (10) is opened only when the internal combustion engine (1) cannot provide a predefined torque solely in cooperation with the exhaust gas turbocharger (2).

2. A combination according to claim 1,
**characterized in that**
a second shut-off element (11) is arranged on the pressure side (12) of the turbocompressor (6), the region between the compressor impeller (17) of the turbocompressor (6) and the second shut-off element (11) forms a pressure-side compressor air space (19), and a device is provided for substantially evacuating the pressure-side compressor air space (19).

3. A combination according to claim 2,
**characterized in that**
the device for substantially evacuating the pressure-side compressor air space (19) is a vacuum pump (16) of a brake system of a vehicle.

4. A combination according to one of the preceding claims,
**characterized in that**
the auxiliary motor (8) is an electric motor which is supplied by an on-board electrical system (9) of a vehicle.

5. A combination according to claim 4,
**characterized in that**
a regulating device is provided for limiting the current draw of the electric motor.

6. A combination according to one of the preceding claims,
**characterized in that**
the turbocompressor (6) is a radial compressor.

7. A combination according to one of the preceding claims,
**characterized in that**
at least the first shut-off element (10) can be actuated actively by a control device.

8. A combination according to claim 3 or one of claims 4 to 7 in connection with claim 2,
**characterized in that**
the second shut-off element (11) is a non-return valve.

9. A method for operating a combination of an exhaust gas turbocharger (2) and a supercharger (5) together with an internal combustion engine (1), the supercharger (5) having a turbocompressor (6) with at least one compressor impeller (17) and with a suction side (13) and a pressure side (12), an auxiliary motor (8) for driving the compressor impeller (17), a flywheel mass (7) for storing drive energy, and a first shut-off element (10) which is arranged on the suction side (13) of the turbocompressor (6), the region between the first shut-off element (10) and the compressor impeller (17) of the turbocompressor (6) forming a suction-side compressor air space (18), and the method comprising the following steps:
• constant driving of the compressor impeller (17) of the turbocompressor (6) and the flywheel mass (7) by means of the auxiliary motor (8),
• closing at least of the first shut-off element (10) and substantially evacuating the suction-side compressor air space (18) by means of the inherent compressor capacity of the turbocompressor (6), and
• opening of the first shut-off element (10) only when the internal combustion engine (1) cannot provide a predefined torque, the auxiliary motor (8) being assisted, during driving of the compressor impeller (17) of the turbocompressor (6), by the drive energy which is stored in the flywheel mass (7),
wherein the supercharger (5) is used in addition to the exhaust gas turbocharger (2), and the first shut-off element (10) is opened only when the internal combustion engine (1) cannot provide a predefined torque solely in cooperation with the exhaust gas turbocharger (2).

10. The method according to claim 9,
**characterized in that**
the supercharger (5) has a second shut-off element (11) on the pressure side (12) of the turbocompressor (6), the region between the compressor impeller (17) of the turbocompressor (6) and the second shut-off element (11) forms a pressure-side compressor air space (19), and the method additionally comprises the step of substantially evacuating the pressure-side compressor air space (19) by means of a device for evacuating the pressure-side compressor air space (19).

11. The method according to claim 10,
**characterized in that**
the evacuation of the pressure-side compressor air space (19) takes place by means of a vacuum pump (16), which forms the device for evacuation, of a brake system of a vehicle which comprises the internal combustion engine (1).

12. The method according to claim 10 or 11,
**characterized in that**
the second shut-off element (11) is transferred into a closed state in the context of the operation of evacuating the pressure-side compressor air space (19).

13. The method according to claim 12,
**characterized in that**
the second shut-off element (11) passes automatically into the closed state.

14. The method according to one of the preceding claims 9 to 13,
**characterized in that**
the auxiliary motor (8) is an electric motor and is supplied by an on-board electrical system (9) of a vehicle which comprises the internal combustion engine (1).

15. The method according to claim 14,
**characterized in that**
the current which is drawn by the electric motor is limited.

16. The method according to claim 15,
**characterized in that**
the current is limited in such a way that the on-board electrical system (9) does not experience any voltage dips which lie outside predefined specification limits of electronic control units of the vehicle.

17. The method according to one of the preceding claims 9 to 16,
**characterized in that**
at least the first shut-off element (10) is actuated actively by a control device.

## Revendications

1. Combinaison constituée d'une turbosoufflante à gaz d'échappement (2) et d'un compresseur d'alimentation (5) destinée à un moteur à combustion interne (1),
sachant que le compresseur d'alimentation (5)
- présente un turbocompresseur (6) pourvu d'au moins une roue à aubes de compresseur (17), sachant que le turbocompresseur (6) présente un côté d'aspiration (13) et un côté de pression (12),
- une masse d'inertie (7) apte à stocker de l'énergie d'entraînement,
- un moteur auxiliaire (8) apte à entraîner la roue à aubes de compresseur (17) et la masse d'inertie (7), et
- un premier organe de blocage (10) disposé sur le côté d'aspiration (13) du turbocompresseur (6),
- sachant que la zone entre le premier organe de blocage (10) et la roue à aubes de compresseur (17) du turbocompresseur (6) forme un espace rempli d'air de compresseur (18) côté aspiration et que le turbocompresseur (6) est configuré de telle manière que le vide peut être fait essentiellement dans l'espace rempli d'air de compresseur (18) côté aspiration, après la fermeture du premier organe de blocage (10), au moyen de la propre puissance de compresseur du turbocompresseur (6), et
- sachant que le premier organe de blocage (10) n'est alors ouvert que lorsque le moteur à combustion interne (1) ne peut fournir seul un couple de rotation prédéfini par coopération avec la turbosoufflante à gaz d'échappement (2).

2. Combinaison selon la revendication 1,
**caractérisée en ce**
**qu'**un deuxième organe de blocage (11) est disposé sur le côté de pression (12) du turbocompresseur (6), en ce que la zone entre la roue à aubes de compresseur (17) du turbocompresseur (6) et le deuxième organe de blocage (11) forme un espace rempli d'air de compresseur côté pression (19), et en ce qu'un dispositif servant à faire le vide essentiellement dans l'espace rempli d'air de compresseur côté de pression (19) est prévu.

3. Combinaison selon la revendication 2,
**caractérisé en ce**
**que** le dispositif servant à faire le vide essentiellement dans l'espace rempli d'air de compresseur côté pression(19) est une pompe à dépression (16) d'un système de freinage d'un véhicule.

4. Combinaison selon l'une quelconque des revendications précédentes,
**caractérisée en ce**
**que** le moteur auxiliaire (8) est un moteur électrique alimenté par un réseau de bord (9) d'un véhicule.

5. Combinaison selon la revendication 4,
**caractérisée en ce**
**que** le système de régulation est prévu pour limiter la consommation de courant du moteur électrique.

6. Combinaison selon l'une quelconque des revendications précédentes,
**caractérisée en ce**
**que** le turbocompresseur (6) est un compresseur radial.

7. Combinaison selon l'une quelconque des revendications précédentes,
**caractérisée en ce**
**qu'**au moins le premier organe de blocage (10) peut être commandé activement par un système de commande.

8. Combinaison selon la revendication 3 ou selon l'une quelconque des revendications 4 à 7 en lien avec la revendication 2,
**caractérisée en ce**
**que** le deuxième organe de blocage (11) est une soupape anti-retour.

9. Procédé servant à faire fonctionner une combinaison constituée d'une turbosoufflante à gaz d'échappement (2) et d'un compresseur d'alimentation (5) conjointement avec un moteur à combustion interne (1), sachant que le compresseur d'alimentation (5) présente un turbocompresseur (6) pourvu au moins d'une roue à aubes de compresseur (17) ainsi que d'un côté d'aspiration (13) et d'un côté de pression (12), un moteur auxiliaire (8) servant à entraîner la roue à aubes de compresseur (17), une masse d'inertie (7) apte à stocker de l'énergie d'entraînement ainsi qu'un premier organe de blocage (10) disposé sur le côté d'aspiration (13) du turbocompresseur (6), en ce que la zone entre le premier organe de blocage (10) et la roue à aubes de compresseur (17) du turbocompresseur (6) forme un espace rempli d'air de compresseur (18) côté aspiration, et sachant que le procédé comprend les étapes suivantes consistant à :
- entraîner en permanence la roue à aubes de compresseur (17) du turbocompresseur (6) et de la masse d'inertie (7) au moyen du moteur auxiliaire (8),
- fermer au moins le premier organe de blocage (10) et faire le vide essentiellement dans l'espace rempli d'air de compresseur côté aspiration (18) au moyen de la puissance propre de compresseur du turbocompresseur (6), et
- ouvrir le premier organe de blocage (10) uniquement lorsque le moteur à combustion interne (1) ne peut pas fournir un couple de rotation prédéfini, sachant que le moteur auxiliaire (8) est soutenu, lors de l'entraînement de la roue à aubes de compresseur (17) du turbocompresseur (6), par l'énergie d'entraînement stockée dans la masse d'inertie (7),
sachant que le compresseur d'alimentation (5) est utilisé en complément de la turbosoufflante à gaz d'échappement (2), et que le premier organe de blocage (10) n'est alors ouvert que lorsque le moteur à combustion interne (1) ne peut fournir par coopération avec la turbosoufflante à gaz d'échappement (2), un couple de rotation prédéfini.

10. Procédé selon la revendication 9,
**caractérisé en ce**
**que** le compresseur d'alimentation (5) présente sur le côté de pression (12) du turbocompresseur (6) un deuxième organe de blocage (11), en ce que la zone entre la roue à aubes de compresseur (17) du turbocompresseur (6) et le deuxième organe de blocage (11) forme un espace rempli d'air de compresseur (19) côté pression, et en ce que le procédé comprend en complément l'étape consistant à faire le vide essentiellement dans l'espace rempli d'air de compresseur (19) côté pression au moyen d'un dispositif servant à faire le vide dans l'espace rempli d'air de compresseur côté pression (19).

11. Procédé selon la revendication 10,
**caractérisé en ce**
**que** le vide est effectué dans l'espace rempli d'air de compresseur côté pression (19) au moyen d'une pompe de dépression (16) formant le dispositif servant à faire le vide, d'un système de freinage d'un véhicule comprenant le moteur à combustion interne (1).

12. Procédé selon la revendication 10 ou 11,
**caractérisé en ce**
**que** le deuxième organe de blocage (11) est amené, dans le cadre de l'opération consistant à faire le vide dans l'espace rempli d'air de compresseur (19) côté pression, dans un état fermé.

13. Procédé selon la revendication 12,
**caractérisé en ce**
**que** le deuxième organe de blocage (11) passe automatiquement dans un état fermé.

14. Procédé selon l'une quelconque des revendications 9 à 13,
**caractérisé en ce**
**que** le moteur auxiliaire (8) est un moteur électrique et est alimenté par un réseau de bord (9) d'un véhicule comprenant le moteur à combustion interne (1).

15. Procédé selon la revendication 14,
**caractérisé en ce**
**que** le courant consommé par le moteur électrique est limité.

16. Procédé selon la revendication 15,
**caractérisé en ce**
**que** la limitation du courant est effectuée de telle manière que le réseau de bord (9) ne subit aucune chute de tension en dehors des limites prédéfinies de spécification des appareils de commande électroniques du véhicule.

17. Procédé selon l'une quelconque des revendications précédentes 9 à 16,
**caractérisé en ce**
**qu'**au moins le premier organe de blocage (10) est commandé activement par un système de commande.
